# EUROPEAN PATENT SPECIFICATION

(11) **EP 4 318 465 B1**
(45) Date of publication and mention of the grant of the patent: **01.01.2025**
(21) Application number: 22798580.1
(22) Date of filing: 21.04.2022
(51) Int. Cl.: G10L 17/04, G10L 17/24, G06F 8/65, G06F 21/32, G10L 17/02, G10L 17/18, G10L 17/08

(54) **UPGRADING METHOD, ELECTRONIC DEVICE AND CHIP**
AKTUALISIERUNGSVERFAHREN, ELEKTRONISCHE VORRICHTUNG UND CHIP
PROCÉDÉ DE MISE À NIVEAU, DISPOSITIF ÉLECTRONIQUE ET PUCE

(30) Priority: 07.05.2021 CN 202110493970
(43) Date of publication of application: 07.02.2024
(73) Proprietor: Huawei Technologies Co., Ltd., Shenzhen, Guangdong 518129 (CN)
(72) Inventor: XU, Jiaming, Shenzhen, Guangdong 518129 (CN); LANG, Yue, Shenzhen, Guangdong 518129 (CN); DU, Yunfan, Shenzhen, Guangdong 518129 (CN)
(74) Representative: Körber, Martin Hans
(86) International application number: PCT/CN2022/088237
(87) International publication number: WO 2022/233239

(56) References cited:
- WO-A1-2020/192890
- CN-A- 106 782 564
- CN-A- 109 683 938
- CN-A- 110 047 490
- CN-A- 112 735 438
- US-A1- 2017 301 353
- US-A1- 2019 066 665

## Description

### TECHNICAL FIELD

This application relates to the field of computer technologies, and in particular, to an upgrade method, an upgrade apparatus, and an electronic device.

### BACKGROUND

Voiceprint recognition is a technology that automatically identifies and verifies an identity of a speaker based on voice signals. A basic scheme of voiceprint recognition includes a registration procedure and a verification procedure. In the registration procedure, a voiceprint recognition system on an electronic device extracts a voiceprint feature from a registration voice entered by a user by using a pre-trained depth model (referred to as a "voiceprint feature extraction model" or "model" in this specification), and stores the voiceprint feature in the electronic device as a user feature template. In the verification procedure, the voiceprint recognition system on the electronic device extracts a voiceprint feature from a verification voice by using the same voiceprint feature extraction model in the registration procedure as a to-be-verified feature, and then verifies an identity of the user based on the to-be-verified feature and the user feature template obtained in the registration procedure.

At present, during upgrade of the voiceprint recognition system on the electronic device (for example, update of the voiceprint feature extraction model), a registration procedure needs to be executed again (to be specific, the user enters a registration voice again, and the electronic device uses a new voiceprint feature extraction model to extract a voiceprint feature from the new registration voice as a new user feature template). Without re-registration, in a subsequent verification procedure, a to-be-verified feature extracted by the electronic device by using the new voiceprint feature extraction model cannot match the old user template feature, and consequently, recognition performance of the voiceprint recognition system deteriorates. However, if a registration procedure is executed again at each time of upgrade, user experience is greatly affected. Examples for updating a speaker verification model and upgrading of a voiceprint model can be found in US 2019/066665 A1 and CN 109 683 938 A, respectively.

Therefore, how to find a balance between voiceprint recognition performance and user experience is an urgent problem to be resolved.

### SUMMARY

Embodiments of this application provide an upgrade method, an electronic device and a chip according to independent claims 1, 9 and 15, respectively, to implement upgrade of a voiceprint recognition system without user perception and consider both voiceprint recognition performance and user experience.

### BRIEF DESCRIPTION OF DRAWINGS

FIG. 1 is a schematic diagram of a structure of an electronic device according to an embodiment of this application;
FIG. 2 is a schematic diagram of a structure of an electronic device according to an embodiment of this application;
FIG. 3 is a flowchart of an upgrade method according to an embodiment of this application;
FIG. 4 is a schematic diagram of prompting a user to enter a registration voice by an electronic device;
FIG. 5 is a schematic diagram in which a user triggers an electronic device to acquire a verification voice;
FIG. 6A is a schematic diagram of a specific registration-free upgrade processing manner according to an embodiment of this application;
FIG. 6B is a schematic diagram of another specific registration-free upgrade processing manner according to an embodiment of this application;
FIG. 6C is a schematic diagram of another specific registration-free upgrade processing manner according to an embodiment of this application; and
FIG. 6D is a schematic diagram of another specific registration-free upgrade processing manner according to an embodiment of this application.

### DESCRIPTION OF EMBODIMENTS

Voiceprint (Voiceprint) is a sound wave spectrum that is displayed by an electroacoustic instrument and that carries speech information. Voiceprints are characterized by stability, measurability, and uniqueness. After a person becomes an adult, the voice of the person can remain stable for a long time. Sizes and forms of vocal organs used by people in speaking are greatly different from person to person. Therefore, voiceprint graphs of any two people are different, and distributions of resonant peaks of voices of different people in spectrograms are different. Voiceprint recognition is to compare voices of two speakers on same phonemes to determine whether the two speakers are the same person, to implement the function of "recognizing people by listening to voices".

From the perspective of algorithms, voiceprint recognition may further include text-dependent (Text-Dependent) voiceprint recognition and text-independent (Text-independent) voiceprint recognition. A text-dependent voiceprint recognition system requires utterance of sound by a user based on specified content, and voiceprint models of people are accurately established one by one. During recognition, sound also needs to be uttered based on the specified content. Therefore, better recognition can be implemented. However, the system requires the cooperation of the user. If sound uttered by the user does not conform to the specified content, the user cannot be correctly recognized. A text-independent recognition system does not specify content to be uttered by a speaker, and it is more difficult to establish a model. However, the system is easy to use and can be used in a wide range. Considering practicability, currently, a text-dependent voiceprint recognition algorithm is generally used on a terminal device.

Voiceprint recognition may include speaker identification (SI) and speaker verification (SV). Speaker identification is used to determine which one of several people speaks a voice, and is a "multiple-choice" problem. Speaker verification is used to verify whether a voice is spoken by a specified person. It is a "true-or-false" problem.

This specification is mainly about a speaker verification function. Unless otherwise specified, a voiceprint recognition function below refers to the speaker verification function, that is, the "speaker verification function" and the "voiceprint recognition function" are interchangeable.

The speaker verification function includes a registration procedure and a verification procedure. In the registration procedure, before a user formally uses the voiceprint recognition function, a voiceprint recognition system acquires a registration voice entered by the user, extracts a voiceprint feature from the registration voice according to a pre-trained depth model (referred to as a "voiceprint feature extraction model" or "model" in this specification), and stores the voiceprint feature in an electronic device as a user feature template. In the verification procedure, when a user uses the voiceprint recognition function, the voiceprint recognition system acquires a verification voice entered by the user, extracts a voiceprint feature from the verification voice by using the same voiceprint feature extraction model in the registration procedure as a to-be-verified feature, then performs similarity scoring on the to-be-verified feature and the user feature template obtained in the registration procedure, and verifies an identity of the user based on a scoring result.

A voice of a user is sensitive personal information, cannot be stored, and cannot be uploaded to a cloud. Therefore, in consideration of privacy security, a voiceprint recognition system generally runs offline on an electronic device, and a trained voiceprint feature extraction model needs to be stored in the electronic device in advance.

However, electronic devices with a voiceprint recognition function have been emerging, and models are iterated very quickly, and are basically updated once a year. With the update of electronic devices, requirements for speaker verification technologies keep increasing. When a speaker verification technology needs to be upgraded and an upgraded new algorithm needs to be compatible with an old device, a voiceprint recognition system on the old device needs to be upgraded, that is, a new voiceprint feature extraction model needs to be remotely pushed to an electronic device. After receiving the new voiceprint feature extraction model, the electronic device needs to execute a registration procedure again based on the new voiceprint feature extraction model (that is, a user needs to enter a registration voice again, and the voiceprint recognition system uses the new voiceprint feature extraction model to extract a voiceprint feature from the registration voice newly entered by the user as a new user feature template). Without re-registration, in a subsequent verification procedure, a to-be-verified feature extracted by the voiceprint recognition system by using the new voiceprint feature extraction model cannot match an old user template feature, and consequently, recognition performance of the voiceprint recognition system deteriorates. However, if a registration procedure is executed again at each time of upgrade, user experience is greatly affected.

In view of this, embodiments of this application provide an upgrade solution. After detecting a new feature extraction model, an electronic device directly performs user registration based on a verification voice obtained in a verification procedure, and a user does not need to provide a registration voice again for user registration. In this way, upgrade of a voiceprint recognition system is implemented without user perception, and both voiceprint recognition performance and user experience are improved.

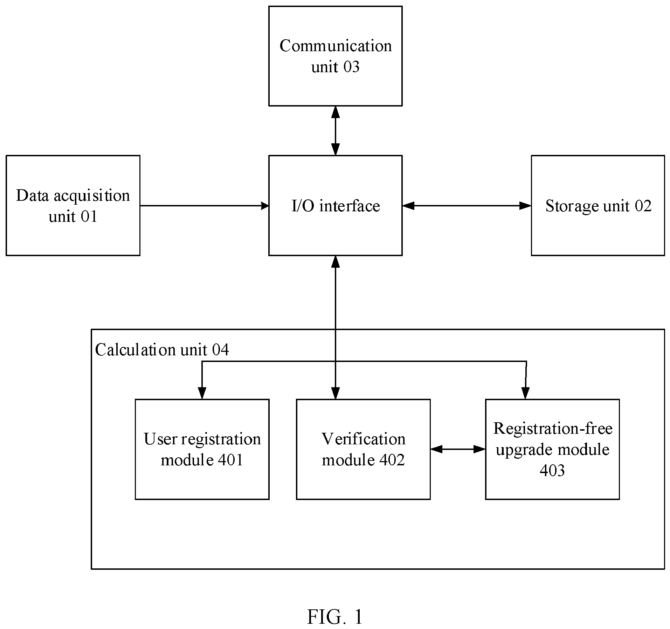

It should be understood that the technical solutions in embodiments of this application may be applied to any electronic device having a voiceprint recognition function. Refer to FIG. 1. An electronic device in this embodiment of this application has at least a data acquisition unit 01, a storage unit 02, a communication unit 03, and a calculation unit 04. The units may be connected to and communicate with each other through an input/output (I/O) interface.

The data acquisition unit 01 is configured to acquire a voice (a registration voice, a verification voice, or the like) entered by a user. A specific implementation of the data acquisition unit 01 may be a microphone, a sound sensor, or the like.

The storage unit 02 is configured to store a voiceprint feature extraction model and a threshold that are used by the voiceprint recognition function and a user template feature that is obtained by a user registration module in the calculation unit 04.

The communication unit 03 is configured to receive a new voiceprint feature extraction model, and may be further configured to receive a new threshold, and provide the new threshold to the calculation unit 04.

The calculation unit 04 includes:
a user registration module 401, configured to: extract a user template feature based on a registration voice obtained by the data acquisition unit 01, and provide the user template feature to a verification module 402;
the verification module 402, configured to verify an identity of a speaker based on a verification voice obtained by the data acquisition unit Of and the user template feature, the model, and the threshold that are stored in the storage unit 02 to obtain a verification result; and
a registration-free upgrade module 403, configured to: determine a new user template feature based on a new model received by the communication unit 03 and the verification voice and a scoring result (optional) that are obtained by the verification module, and update the old user template feature and the old model in the storage unit 02 based on the new user template feature and the new model. Optionally, the registration-free upgrade module further updates the threshold stored in the storage unit 02.

In embodiments of this application, there may be a plurality of specific product forms of the electronic device. For example, the electronic device includes, but is not limited to, a mobile phone, a tablet computer, an artificial intelligence (AI) intelligent voice terminal, a wearable device, an augmented reality (AR)/virtual reality (VR) device, an in-vehicle terminal, a laptop computer (Laptop), a desktop computer, and a smart home device (for example, a smart television or a smart speaker).

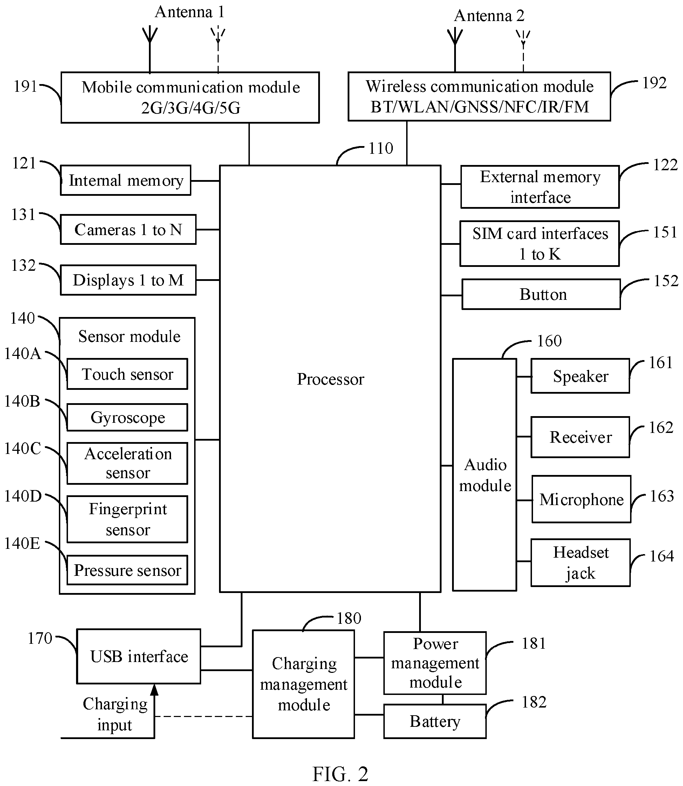

For example, the electronic device is a mobile phone. FIG. 2 is a schematic diagram of a hardware structure of a mobile phone 100 according to an embodiment of this application.

The mobile phone 100 includes a processor 110, an internal memory 121, an external memory interface 122, a camera 131, a display 132, a sensor module 140, and a subscriber identity module (SIM) card interface 151, a key 152, an audio module 160, a speaker 161, a receiver 162, a microphone 163, a headset jack 164, a universal serial bus (USB) interface 170, a charging management module 180, a power management module 181, a battery 182, a mobile communication module 191, and a wireless communication module 192. In some other embodiments, the mobile phone 100 may further include a motor, an indicator, a key, and the like.

It should be understood that the hardware structure shown in FIG. 2 is merely an example. The mobile phone 100 in this embodiment of this application may have more or fewer components than those in the mobile phone 100 shown in the figure, may combine two or more components, or may have a different component configuration. Components shown in the figure may be implemented in hardware including one or more signal processing and/or application-specific integrated circuits, software, or a combination of hardware and software.

The processor 110 may include one or more processing units. For example, the processor 110 may include an application processor (AP), a modem, a graphics processing unit (GPU), an image signal processor (ISP), a controller, a video codec, a digital signal processor (DSP), a baseband processor, a neural-network processing unit NPU), and/or the like. Different processing units may be independent components, or may be integrated into one or more processors.

In some embodiments, a buffer may be further disposed in the processor 110, to store instructions and/or data. For example, the buffer in the processor 110 may be a cache. The buffer may be configured to store instructions and/or data that are just used, generated, or recycled by the processor 110. If needing to use the instructions or the data again, the processor 110 may directly invoke the instructions or the data from the buffer. This helps reduce a time for the processor 110 to obtain the instructions or the data, and helps improve system efficiency.

The internal memory 121 may be configured to store a program and/or data. In some embodiments, the internal memory 121 includes a program storage area and a data storage area.

The program storage area may be configured to store an operating system (for example, an operating system such as Android or iOS), a computer program required by at least one function, and the like. For example, the program storage area may store a computer program (for example, a voiceprint recognition system) required by a voiceprint recognition function. The data storage area may be configured to store data (for example, audio data) created and/or acquired in a process of using the mobile phone 100. For example, the processor 110 may invoke the program and/or the data stored in the internal memory 121, so that the mobile phone 100 is enabled to perform a corresponding method, to implement one or more functions. For example, the processor 110 invokes some programs and/or data in the internal memory, so that the mobile phone 100 performs the upgrade method provided in embodiments of this application.

The internal memory 121 may be a high-speed random access memory, a non-volatile memory, and/or the like. For example, the non-volatile memory may include at least one of one or more disk memory devices, flash memory devices, and/or universal flash storages (UFS).

The external memory interface 122 may be configured to connect to an external memory card (for example, a Micro SD card), to extend a storage capability of the mobile phone 100. The external memory card communicates with the processor 110 through the external memory interface 122, to implement a data storage function. For example, the mobile phone 100 may store files such as images, music, and videos in an external memory card through the external memory interface 122.

The camera 131 may be configured to capture dynamic and static images and the like. Generally, the camera 131 includes a lens and an image sensor. An object is projected onto the image sensor by using an optical image generated by the lens, and then the optical image is converted into an electrical signal for subsequent processing. For example, the image sensor may be a charge coupled device (CCD) or a complementary metal-oxide-semiconductor (CMOS) photoelectric transistor. The image sensor converts an optical signal into an electrical signal, and then transmits the electrical signal to the ISP. It should be noted that the mobile phone 100 may include one or N cameras 131, and N is a positive integer greater than 1.

The display 132 may include a display panel, configured to display a user interface. The display panel may use a liquid crystal display (LCD), an organic light-emitting diode (OLED), an active-matrix organic light emitting diode (AMOLED), a flexible light-emitting diode (FLED), a mini LED, a micro LED, a micro OLED, quantum dot light emitting diodes (QLED), or the like. It should be noted that the mobile phone 100 may include one or M displays 132, and M is a positive integer greater than 1. For example, the mobile phone 100 may implement a display function by using the GPU, the display 132, the application processor, and the like.

The sensor module 140 may include one or more sensors, for example, a touch sensor 140A, a gyroscope 140B, an acceleration sensor 140C, a fingerprint sensor 140D, and a pressure sensor 140E. In some embodiments, the sensor module 140 may further include an ambient light sensor, a distance sensor, a proximity sensor, a bone conduction sensor, a temperature sensor, and the like.

The SIM card interface 151 is configured to connect to a SIM card. The SIM card may be inserted into the SIM card interface 151 or detached from the SIM card interface 151, to implement contact with or separation from the mobile phone 100. The mobile phone 100 may support one or K SIM card interfaces 151, where K is a positive integer greater than 1. The SIM card interface 151 may support a nano-SIM card, a micro-SIM card, a SIM card, and/or the like. A plurality of cards may be inserted into a same SIM card interface 151 at the same time. The plurality of cards may be of a same type or different types. The SIM card interface 151 may be compatible with different types of SIM cards. The SIM card interface 151 may be compatible with an external memory card. The mobile phone 100 interacts with a network through the SIM card, to implement functions such as calling and data communication. In some embodiments, the mobile phone 100 may use an eSIM, that is, an embedded SIM card. The eSIM card may be embedded in the mobile phone 100, and cannot be separated from the mobile phone 100.

The key 152 may include a power key, a volume key, and the like. The key 152 may be a mechanical key or a touch key. The mobile phone 100 may receive a key input, and generate a key signal input related to a user setting and function control of the mobile phone 100.

The mobile phone 100 may implement an audio function through the audio module 160, the speaker 161, the receiver 162, the microphone 163, the headset jack 164, the application processor, for example, an audio playing function, a recording function, a voiceprint registration function, a voiceprint verification function, and a voiceprint recognition function.

The audio module 160 may be configured to perform digital-to-analog conversion and/or analog-to-digital conversion on audio data, and may further be configured to encode and/or decode the audio data. For example, the audio module 160 may be disposed independent of the processor, or may be disposed in the processor 110, or some function modules of the audio module 160 may be disposed in the processor 110.

The speaker 161, also referred to as a "loudspeaker", is configured to convert audio data into a sound, and play the sound. For example, the mobile phone 100 may be configured to listen to music, answer a call in hands-free mode, or give a voice prompt through the speaker 161.

The receiver 162, also referred to as an "earpiece", is configured to convert audio data into a sound, and play the sound. For example, when a call is answered by using the mobile phone 100, the receiver 162 may be put close to a human ear to answer the call.

The microphone 163, also referred to as a "mike" or "mic", is configured to acquire a sound (for example, an ambient sound, including a sound made by a person or a sound made by a device), and convert the sound into audio electrical data. When making a call or sending a voice, the user may make a sound near to the microphone 163 through the mouth of the user, and the microphone 163 acquires the sound made by the user. When the voiceprint recognition function of the mobile phone 100 is enabled, the microphone 163 may acquire ambient sound in real time, and obtain audio data.

It should be noted that at least one microphone 163 may be disposed in the mobile phone 100. For example, two microphones 163 are disposed in the mobile phone 100, to implement a noise reduction function in addition to sound acquisition. In another example, three, four, or more microphones 163 may alternatively be disposed in the mobile phone 100, to implement a sound source recognition, a directional recording function, or the like when implementing sound acquisition and noise reduction.

The headset jack 164 is configured to connect to a wired headset. The headset jack 164 may be a USB interface 170, or may be a 3.5 mm open mobile phone 100 platform (OMTP) standard interface, a cellular telecommunications industry association of the USA (CTIA) standard interface, or the like.

The USB interface 170 is an interface that complies with a USB standard specification, and may be specifically a Mini USB interface, a Micro USB interface, a USB Type C interface, or the like. The USB interface 170 may be configured to connect to a charger to charge the mobile phone 100, or may be configured to perform data transmission between the mobile phone 100 and a peripheral, or may be configured to connect to a headset for playing audio through the headset. For example, in addition to serving as the headset jack 164, the USB interface 170 may be further configured to connect to another mobile phone 100, for example, an AR device or a computer.

The charging management module 180 is configured to receive a charging input from the charger. The charger may be a wireless charger or a wired charger. In some embodiments of wired charging, the charging management module 180 may receive a charging input from the wired charger through the USB interface 170. In some embodiments of wireless charging, the charging management module 180 may receive a wireless charging input through a wireless charging coil of the mobile phone 100. The charging management module 180 supplies power to the mobile phone 100 through the power management module 181 while charging the battery 182.

The power management module 181 is configured to connect the battery 182, the charging management module 180, and the processor 110. The power management module 181 receives an input from the battery 182 and/or the charging management module 180, and supplies power to the processor 110, the internal memory 121, the display 132, the camera 131, and the like. The power management module 181 may further be configured to monitor parameters such as a battery capacity, a quantity of battery cycles, and a battery health status (electrical leakage and impedance). In some other embodiments, the power management module 181 may alternatively be disposed in the processor 110. In some other embodiments, the power management module 181 and the charging management module 180 may alternatively be disposed in a same device.

The mobile communication module 191 may provide a solution that is applied to the mobile phone 100 and that includes wireless communication such as 2G, 3G, 4G, and 5G. The mobile communication module 191 may include a filter, a switch, a power amplifier, a low noise amplifier (LNA), and the like.

The wireless communication module 192 may provide a solution that is applied to the mobile phone 100 and that includes wireless communication such as a WLAN (for example, a Wi-Fi network), Bluetooth (BT), a global navigation satellite system (GNSS), frequency modulation (FM), a near field communication technology (NFC), and an infrared technology (IR). The wireless communication module 192 may be one or more components integrating at least one communication processing module.

In some embodiments, an antenna 1 of the mobile phone 100 is coupled to the mobile communication module 191, and an antenna 2 is coupled to the wireless communication module 192, so that the mobile phone 100 can communicate with another device. Specifically, the mobile communication module 191 may communicate with another device through the antenna 1, and the wireless communication module 192 may communicate with another device through the antenna 2.

For example, the mobile phone 100 may receive, based on the wireless communication module 192, upgrade information (including a new voiceprint feature extraction model, a new threshold, and the like) from another device, and then update the voiceprint recognition system on the electronic device based on the upgrade information (for example, update the voiceprint feature extraction model, and update the threshold). Optionally, the another device may be a server of a cloud service vendor, for example, a platform that is established and maintained by a vendor or an operator of the mobile phone 100 and that provides a required service in an on-demand and easy-to-expand manner by using a network, and is specifically, for example, a server of a mobile phone vendor "Huawei". Certainly, the another device may alternatively be another electronic device. This is not limited in this application.

In embodiments of this application, an upgrade method provided in embodiments of this application is described below in detail with reference to the accompanying drawings and application scenarios. The following embodiments may be all implemented in the mobile phone 100 having the foregoing hardware structure.

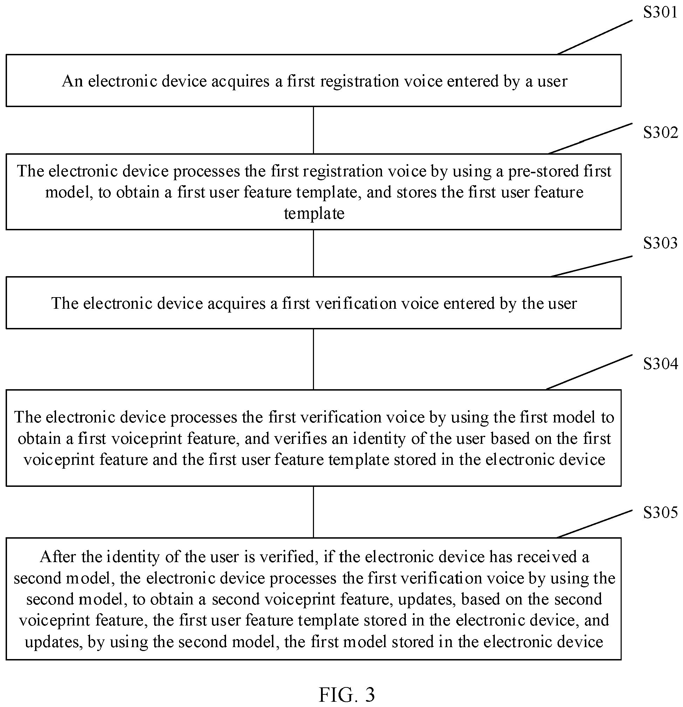

FIG. 3 schematically shows a procedure of an upgrade method according to an embodiment of this application.

S301: An electronic device acquires a first registration voice entered by a user.

Specifically, the electronic device may acquire an ambient sound through the microphone 163, to obtain the first registration voice recorded by the user.

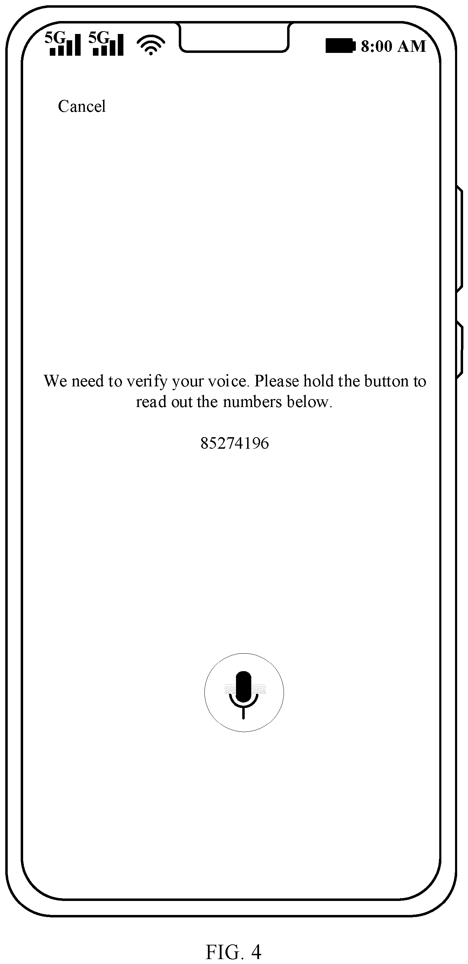

During specific implementation, the user may be prompted by the electronic device to speak the first registration voice. For example, as shown in FIG. 4, the electronic device may display a text on the display 132 to prompt the user to speak a registration voice "1234567". In another example, the electronic device may also perform voice prompt through the speaker 161. There may be a plurality of scenarios in which the electronic device prompts the user to enter a registration voice. For example, the electronic device may automatically prompt, when the user enables the voiceprint recognition function of the electronic device for the first time, the user to speak the registration voice, or the user may operate, when the user enables the voiceprint recognition function of the electronic device for the first time, the electronic device to prompt the user to speak the registration voice, or the user may trigger, as required when the user subsequently enables the voiceprint recognition function, the electronic device to prompt the user to speak the registration voice.

Optionally, when performing voiceprint registration, the user may input a registration voice a plurality of times, so that accuracy of voiceprint recognition can be improved.

S302: The electronic device processes the first registration voice by using a pre-stored first model, to obtain a first user feature template, and stores the first user feature template.

The first model is a voiceprint feature extraction model that is trained in advance by using a neural network. An input of the first model is a voice, and an output is a voiceprint feature corresponding to the inputted voice. An algorithm on which the first model is based may be, but is not limited to, a filter bank (FBank) algorithm, a mel-frequency cepstral coefficients (MFCC) algorithm, a D-vector algorithm, among other algorithms.

Optionally, because quality of a registration voice greatly affects recognition precision, before processing the first registration voice by using the pre-stored first model, the electronic device may first perform quality detection on the first registration voice. The first registration voice is used for registration only when quality of the first registration voice meets a first preset requirement (in other words, the first registration voice is processed by using the pre-stored first model, to obtain the first user feature template, and the first user feature template is stored). If the quality is poor, the first registration voice may be rejected from being used for registration, or the user may be prompted to enter a registration voice again and attempt registration again, or the like.

For example, the electronic device prompts, on the display 132, the user to speak a keyword of a voice assistant three times, for example, "Xiaoyi Xiaoyi". Each time the user speaks "Xiaoyi Xiaoyi", the microphone 163 of the electronic device sends an acquired voice to the processor 110 of the mobile phone. The processor 110 segments a voice corresponding to the keyword, and uses the voice as the registration voice. Then the processor 110 determines a signal-to-noise ratio of the registration voice, and determines whether the signal-to-noise ratio meets a requirement. When the signal-to-noise ratio is less than a set threshold (in other words, noise is excessively large), the registration is rejected. For a voice that passes signal-to-noise ratio detection, the processor 110 performs calculation on the voice by using the first model to obtain a user template feature, and stores the user template feature in the internal memory 121.

Optionally, the electronic device may store a plurality of first user feature templates, to improve the accuracy of voiceprint recognition.

It should be understood that, S301 and S302 are performed before the electronic device registers a voice of the user for the first time, to be specific, before the user uses the voiceprint recognition function for the first time. After the registration is completed for the first time, the user may start to use the voiceprint recognition function, as shown in S303 and S304.

S303: The electronic device acquires a first verification voice entered by the user.

During specific implementation, the user may be prompted by the electronic device to speak a verification voice. A method used by the electronic device to prompt the user to speak a verification voice is similar to a method used by the electronic device to prompt the user to speak a registration voice, and repeated parts are not described one by one.

There may be a plurality of scenarios in which the electronic device prompts the user to enter a verification voice. For example, after being powered on by the user, the electronic device may automatically prompt the user to speak the first verification voice. The first verification voice is used for verifying an identity of the user to unlock the electronic device. Alternatively, the electronic device may automatically prompt the user to speak the first verification voice when the user opens an encrypted application (for example, a diary book). The first verification voice is used for verifying an identity of the user to unlock the application. Alternatively, the electronic device may automatically prompt the user to speak the first verification voice when the user opens an application and is about to log in to an account. The first verification voice is used for verifying an identity of the user to automatically fill in the account and a password of the user.

The electronic device may be triggered by an operation of the user to acquire the first verification voice entered by the user. For example, the user triggers a verification instruction by operating the electronic device, so that after receiving the verification instruction, the electronic device prompts the user to enter the first verification voice, and acquires the first verification voice entered by the user. For example, the user may trigger the verification instruction by tapping a corresponding position of an icon corresponding to the voiceprint recognition function on a touchscreen of the electronic device, so that the electronic device prompts the user to speak the first verification voice. In another example, the user may trigger the verification instruction by operating a physical entity (for example, a physical key, a mouse, or a joystick). In another example, the user may trigger the verification instruction by using a specific gesture (for example, double-clicking the touchscreen of the electronic device), so that the electronic device prompts the user to speak the first verification voice. In another example, the user may speak a keyword "voiceprint recognition" to the electronic device (for example, a smartphone or an in-vehicle apparatus). After acquiring, through the microphone 163, the keyword "voiceprint recognition" uttered by the user, the electronic device triggers the verification instruction, and prompts the user to speak the first verification voice.

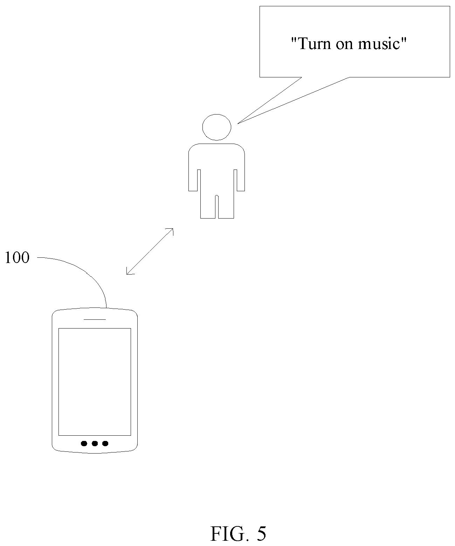

Alternatively, when the user speaks, to the electronic device, a control command used for controlling the electronic device, the electronic device acquires the control command, and uses the control command as the first verification voice to perform voiceprint recognition. To be specific, the electronic device triggers the verification instruction when receiving the control command, and uses the control command as the first verification voice to perform voiceprint recognition. For example, as shown in FIG. 5, the user may utter a control command "Turn on music" to the electronic device (for example, a smartphone or an in-vehicle apparatus). After acquiring, through the microphone 163, the voice "Turn on music" uttered by the user, the electronic device uses the voice as the first verification voice to perform voiceprint recognition. In another example, the user may utter a control command "Set to 27°C" to the electronic device (for example, a smart air conditioner). After acquiring, through the microphone 163, the voice "Set to 27°C" uttered by the user, the electronic device uses the voice as the first verification voice to perform voiceprint recognition.

Optionally, when performing voiceprint verification, the user may input a verification voice a plurality of times, to improve the accuracy of voiceprint recognition.

S304: The electronic device processes the first verification voice by using the first model to obtain a first voiceprint feature, and verifies an identity of the user based on the first voiceprint feature and the first user feature template stored in the electronic device.

First, the electronic device inputs the first verification voice into the same model (in other words, the first model) in the registration procedure in S302, and the first model outputs a voiceprint feature.

Then, the electronic device calculates a similarity between the first voiceprint feature and the first user feature template. A method for calculating a similarity may include, but is not limited to, a cosine distance (CDS) algorithm, a linear discriminant analysis (LDA) algorithm, a probabilistic linear discriminant analysis (PLDA) algorithm, among other algorithms. For example, in cosine distance model scoring, a cosine value between a feature vector of a to-be-verified first voiceprint feature and a feature vector of the user template feature is calculated, and the cosine value is used as a similarity score in other words, a scoring result). For example, in probabilistic linear discriminant analysis model scoring, a similarity score (in other words, a scoring result) between a to-be-verified first voiceprint feature and the user template feature is calculated by using a pre-trained probabilistic linear discriminant analysis model. It should be understood that, if a plurality of user template features are registered by a user, fusion matching scoring may be performed based on a to-be-verified first voiceprint feature and the plurality of user template features.

Then, the electronic device selects, based on the scoring result, to accept or reject a control command corresponding to the verification voice. For example, the electronic device determines whether the similarity is greater than a first verification threshold corresponding to the first model. If the similarity is greater than the first verification threshold, the verification succeeds. To be specific, a speaker of the verification voice is consistent with a speaker of the registration voice, and then a corresponding control operation (for example, unlocking the electronic device, opening an application, or logging in to an account with a password) is performed. If the similarity is not greater than the first verification threshold, the verification fails. To be specific, the speaker of the verification voice is inconsistent with the speaker of the registration voice, and a corresponding control operation is not performed. Optionally, when the verification fails, the electronic device may display a verification result on the display 132, to prompt the user that the verification fails, or the electronic device may prompt the user to enter a verification voice again to attempt re-verification.

S305: After the identity of the user is verified, if the electronic device has received a second model, the electronic device processes the first verification voice by using the second model, to obtain a second voiceprint feature, updates, based on the second voiceprint feature, the first user feature template stored in the electronic device, and updates, by using the second model, the first model stored in the electronic device.

It should be understood that time at which the electronic device receives the second model is later than time at which the electronic device receives the first model. In other words, the second model is an updated model relative to the first model.

The second model is a voiceprint feature extraction model that is trained in advance by using a neural network. An input of the second model is a voice, and an output is a voiceprint feature corresponding to the inputted voice. An algorithm on which the second model is based may be, but is not limited to, an FBank algorithm, an MFCC algorithm, a D-vector algorithm, among other algorithms.

A source of the second model may be actively pushed by a cloud server. For example, the cloud server may push a new model (for example, the second model) to the electronic device when a voiceprint recognition model on the electronic device needs to be upgraded.

After receiving the second model, the electronic device uses the first verification voice obtained in the previous verification procedure (on a premise that a verification result of the verification procedure is a success, to ensure that a verification voice (for example, the first verification voice) obtained in the verification procedure is spoken by a registrant), uses the first verification voice as a new registration voice, and processes the first verification voice by using the second model, to obtain the second voiceprint feature. Then, the electronic device updates, based on the second voiceprint feature, the first user feature template stored in the electronic device, and updates, by using the second model, the first model stored in the electronic device, so that upgrade and registration without user perception (the user does not need to perform an operation of recording a registration voice) is implemented.

A specific implementation in which the electronic device updates, based on the second voiceprint feature, the first user feature template stored in the electronic device includes, but is not limited to, the following two manners:

Manner 1: The electronic device directly uses the second voiceprint feature as a new user feature template (for distinguishing from the first user feature template, the second voiceprint feature is referred to as a second user feature template herein), and replaces the first user feature template stored in the electronic device with the second user feature template.

Manner 2: The electronic device performs weighting/combination on the second voiceprint feature and the first user feature template to obtain a third user feature template, and replaces the first user feature template stored in the electronic device with the third user feature template.

It should be understood that the foregoing two manners are merely examples but not limitations, and are not limited thereto in practice.

Similarly, for model update, the electronic device may directly replace the first model with the second model, or the electronic device may perform weighting/ combination on the first model and the second model. This is not limited in this application. In addition, instead of directly updating an entire model, the electronic device may receive only some update parameters of the model, and then update related parameters of the first model based on the update parameters.

Optionally, different models may correspond to different verification thresholds. After processing the first verification voice by using the second model, if the electronic device has received a second verification threshold corresponding to the second model, the electronic device may further update the first verification threshold based on the second verification threshold, to implement update of the verification threshold. In this case, the electronic device may process the first verification voice by using the second model only after determining that both the second model and the second verification threshold have been received. A manner of updating a verification threshold may be replacing the first verification threshold with the second verification threshold, or may be performing weighting/combination on the second verification threshold and the first verification threshold, and replacing the first verification threshold with a verification threshold obtained by performing the weighting/combination. This is not limited in this application.

Optionally, to ensure performance of the upgraded voiceprint recognition system, the electronic device may process the first verification voice by using the second model (in other words, use the first verification voice as a new registration voice) only after determining that quality of the first verification voice meets a second preset requirement.

The first preset condition includes, but is not limited to, the following two types:
(1) The similarity between the first voiceprint feature and the first user feature template is greater than or equal to the first registration-free threshold.

The first registration-free threshold may be calculated based on the first verification threshold used in the verification procedure (for example, the first registration-free threshold is several decibels higher than the first verification threshold), or may be preset by the electronic device (for example, received from the cloud server and stored in advance). This is not limited in this application.

(2) A signal-to-noise ratio of the first verification voice is greater than or equal to a first signal-to-noise ratio threshold.

The first signal-to-noise ratio threshold may be obtained based on a specified threshold used in the registration procedure (S301) (for example, the first signal-to-noise ratio threshold is consistent with the specified threshold, or the first signal-to-noise ratio threshold is several decibels higher than the specified threshold), or may be preset by the electronic device (for example, received from the cloud server and stored in advance). This is not limited in this application.

Generally, the first signal-to-noise ratio threshold is greater than or equal to 20 dB. Optionally, during specific implementation, a value of the first signal-to-noise ratio threshold may be further fine-tuned according to a specific form of the electronic device. For example, for a mobile phone, the first signal-to-noise ratio threshold may be set to 22 dB, and for a smart speaker, the first signal-to-noise ratio threshold may be set to 20 dB.

Further optionally, the first registration-free threshold is greater than or equal to the first verification threshold corresponding to the first model. In this way, it can be ensured that quality of a verification voice used as the new registration voice is high, and the performance of the upgraded voiceprint recognition system can be further improved.

Further, optionally, the cloud server may further push a new registration-free threshold to the electronic device, and the electronic device updates the registration-free threshold. For example, after the electronic device determines, based on the first registration-free threshold, that the quality of the first verification voice meets a requirement, and processes the first verification voice by using the second model, if the electronic device has received a second registration-free threshold, the electronic device updates the first registration-free threshold based on the second registration-free threshold. A manner of updating the registration-free threshold may be replacing the first registration-free threshold with the second registration-free threshold, or may be performing weighting/combination on the second registration-free threshold and the first registration-free threshold, and replacing the first registration-free threshold with a registration-free threshold obtained by performing the weighting/combination. This is not limited in this application. In this way, the performance of the upgraded voiceprint recognition system can be further improved.

Further, optionally, the cloud server may further push a new signal-to-noise ratio threshold to the electronic device, and the electronic device updates the signal-to-noise ratio threshold. For example, after the electronic device determines, based on the first signal-to-noise ratio threshold, that the quality of the first verification voice meets a requirement, and processes the first verification voice by using the second model, if the electronic device has received a second signal-to-noise ratio threshold, the electronic device updates the first signal-to-noise ratio threshold by using the second signal-to-noise ratio threshold. A manner of updating a signal-to-noise ratio threshold may be replacing the first signal-to-noise ratio threshold with the second signal-to-noise ratio threshold, or may be performing weighting/combination on the second signal-to-noise ratio threshold and the first signal-to-noise ratio threshold, and replacing the first signal-to-noise ratio threshold with a signal-to-noise ratio threshold obtained by performing the weighting/combination. This is not limited in this application. In this way, the performance of the upgraded voiceprint recognition system can be further improved.

It should be understood that the foregoing two conditions (in other words, the registration-free thresholds and the signal-to-noise ratio thresholds) may be separately implemented, or may be simultaneously implemented. This is not limited in this application. In addition, the foregoing two conditions are merely examples rather than limitations. During specific implementation, the first preset condition may alternatively be implemented in another manner.

Optionally, when a plurality of user feature templates are stored in the electronic device, the electronic device may update, only after a quantity of second user feature templates obtained accumulatively reaches a preset quantity, by using the preset quantity of second user feature templates, the first user feature template stored in the electronic device, and update, by using the second model, the first model stored in the electronic device.

Specifically, after the verification procedure is completed and the identity of the user is verified, the electronic device processes, by using the second model, the verification voice obtained this time, to obtain at least one second voiceprint feature, stores each second voiceprint feature as a second user feature template in the internal memory 121, then determines whether a quantity of second user feature templates accumulated in the internal memory 121 reaches the preset quantity (for example, 3), if the quantity of second user feature templates does not reach the preset quantity, waits for a next verification procedure, and obtains, in the next verification procedure, a second user feature template based on the second model and a verification voice in the next verification procedure, and if the quantity of second user feature templates reaches the preset quantity, updates all first user feature templates by using all second user feature templates, and updating, by using the second model, the first model stored in the electronic device.

In this way, it can be ensured that the upgraded voiceprint recognition system has a plurality of available second user feature templates, and the performance of the upgraded voiceprint recognition system can be further improved.

It should be understood that the foregoing prerequisites (for example, determining whether the electronic device receives the second model and/or the second verification threshold, and determining whether the quality of the first verification voice meets the second preset requirement) used to trigger the electronic device to use the verification voice as the new registration voice (in other words, the electronic device processes the first verification voice by using the second model to obtain the second voiceprint feature (in other words, the second user feature template)) may be implemented in combination, and a sequence of determining the prerequisites by the electronic device may be changed.

For example, several possible specific implementations of step S305 are provided below.

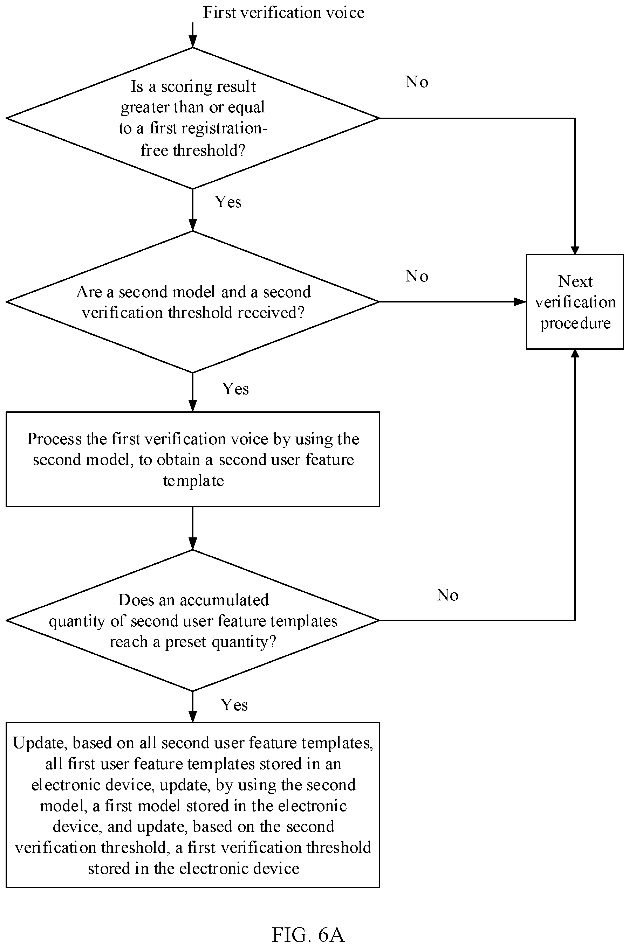

In a first implementation, as shown in FIG. 6A, after the verification procedure is performed and the verification succeeds, the electronic device determines whether the scoring result obtained in the verification procedure is greater than or equal to the first registration-free threshold; if the scoring result is less than the first registration-free threshold, enters a next verification procedure; if the scoring result is greater than or equal to the first registration-free threshold, continues to determine whether the electronic device has received the second model and the second verification threshold; if the electronic device has not received the second model and the second verification threshold, enters a next verification procedure; and if the electronic device has received the second model and the second verification threshold, processes the first verification voice by using the second model, to obtain the second user feature template. The electronic device determines whether an accumulated quantity of second user feature templates reaches a preset quantity; if the accumulated quantity of second user feature templates does not reach the preset quantity, enters a next verification procedure; and if the accumulated quantity of second user feature templates reaches the preset quantity, updates, by using all second user feature templates, all first user feature templates stored in the electronic device, updates, by using the second model, the first model stored in the electronic device, and updates, based on the second verification threshold, the first verification threshold stored in the electronic device.

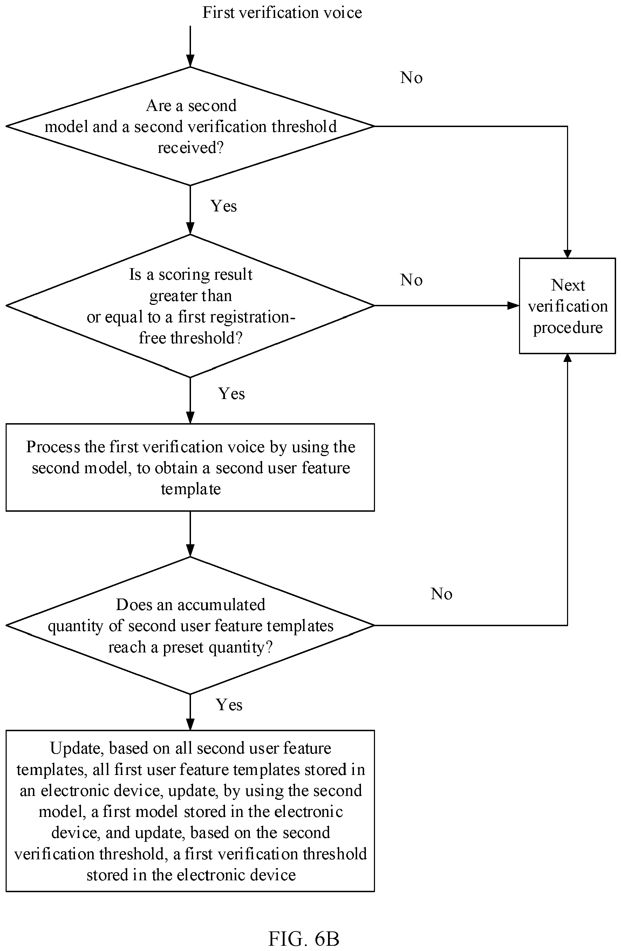

In a second implementation, as shown in FIG. 6B, after the verification procedure is performed and the verification succeeds, the electronic device determines whether the electronic device has received the second model and the second verification threshold; if the electronic device has not received the second model and the second verification threshold, enters a next verification procedure; if the electronic device has received the second model and the second verification threshold, continues to determine whether the scoring result obtained in the verification procedure is greater than or equal to the first registration-free threshold; if the scoring result is less than the first registration-free threshold, enters a next verification procedure; and if the scoring result is greater than or equal to the first registration-free threshold, processes the first verification voice by using the second model, to obtain the second user feature template. The electronic device determines whether an accumulated quantity of second user feature templates reaches a preset quantity; if the accumulated quantity of second user feature templates does not reach the preset quantity, enters a next verification procedure; and if the accumulated quantity of second user feature templates reaches the preset quantity, updates, by using all second user feature templates, all first user feature templates stored in the electronic device, updates, by using the second model, the first model stored in the electronic device, and updates, based on the second verification threshold, the first verification threshold stored in the electronic device.

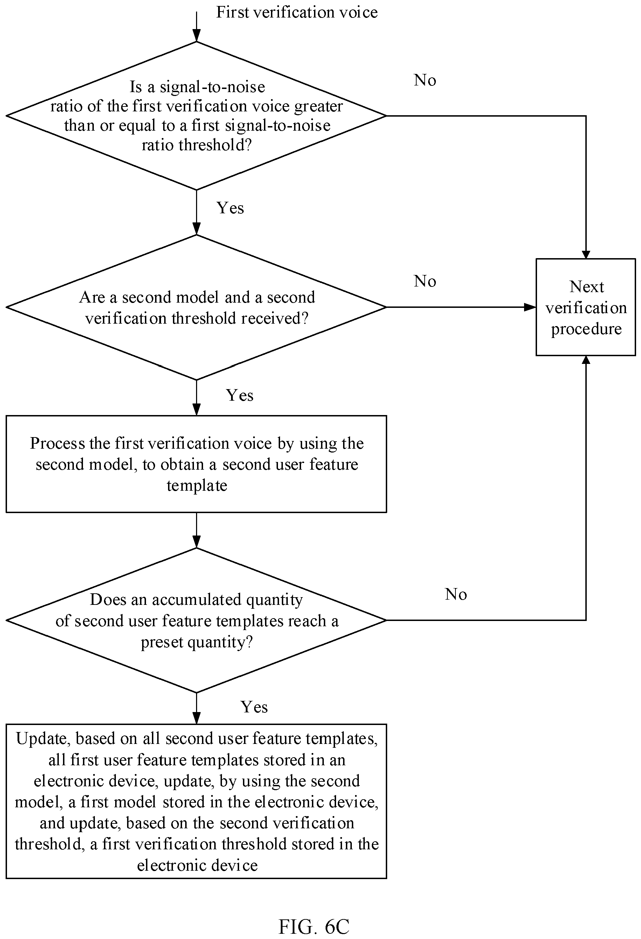

In a third implementation, as shown in FIG. 6C, after the verification procedure is performed and the verification succeeds, the electronic device determines whether the signal-to-noise ratio of the first verification voice is greater than or equal to the first signal-to-noise ratio threshold; if the signal-to-noise ratio of the first verification voice is less than the first signal-to-noise ratio threshold, enters a next verification procedure; if the signal-to-noise ratio of the first verification voice is greater than or equal to the first signal-to-noise ratio threshold, continues to determine whether the electronic device has received the second model and the second verification threshold; if the electronic device has not received the second model and the second verification threshold, enters a next verification procedure; and if the electronic device has received the second model and the second verification threshold, processes the first verification voice by using the second model, to obtain the second user feature template. The electronic device determines whether an accumulated quantity of second user feature templates reaches a preset quantity; if the accumulated quantity of second user feature templates does not reach the preset quantity, enters a next verification procedure; and if the accumulated quantity of second user feature templates reaches the preset quantity, updates, by using all second user feature templates, all first user feature templates stored in the electronic device, updates, by using the second model, the first model stored in the electronic device, and updates, based on the second verification threshold, the first verification threshold stored in the electronic device.

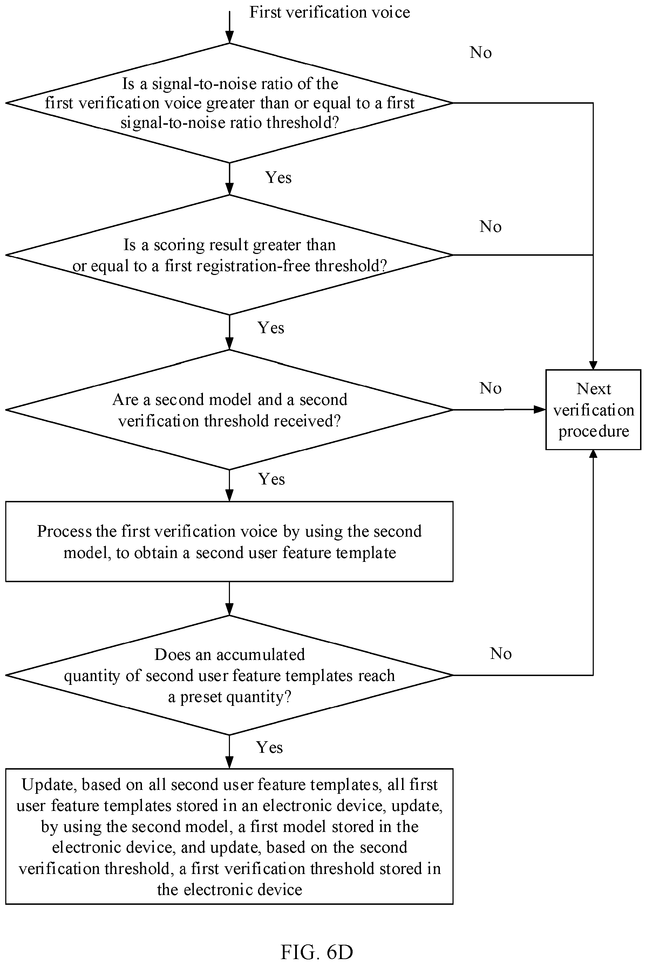

In a fourth implementation, as shown in FIG. 6D, after the verification procedure is performed and the verification succeeds, the electronic device determines whether the signal-to-noise ratio of the first verification voice is greater than or equal to the first signal-to-noise ratio threshold; if the signal-to-noise ratio of the first verification voice is less than the first signal-to-noise ratio threshold, enters a next verification procedure; if the signal-to-noise ratio of the first verification voice is greater than or equal to the first signal-to-noise ratio threshold, continues to determine whether the scoring result obtained in the verification procedure is greater than the first registration-free threshold; if the scoring result is less than the first registration-free threshold, enters a next verification procedure; if the scoring result is greater than or equal to the first registration-free threshold, continues to determine whether the electronic device has received the second model and the second verification threshold; if the electronic device has not received the second model and the second verification threshold, enters a next verification procedure; and if the electronic device has received the second model and the second verification threshold, processes the first verification voice by using the second model, to obtain the second user feature template. The electronic device determines whether an accumulated quantity of second user feature templates reaches a preset quantity; if the accumulated quantity of second user feature templates does not reach the preset quantity, enters a next verification procedure; and if the accumulated quantity of second user feature templates reaches the preset quantity, updates, by using all second user feature templates, all first user feature templates stored in the electronic device, updates, by using the second model, the first model stored in the electronic device, and updates, based on the second verification threshold, the first verification threshold stored in the electronic device.

It should be understood that, merely four possible combination manners are listed above, which are not limited in practice.

After the electronic device updates, by using the second user feature template, the first user feature template stored in the electronic device, and updates, by using the second model, the first model stored in the electronic device (in other words, after the first registration-free upgrade is completed), when the user uses a voiceprint verification function again, the electronic device may perform a verification procedure by using an updated model, for example, acquire the second verification voice entered by the user, and process the second verification voice by using the second model, to obtain a third voiceprint feature; and verify the identity of the user based on the third voiceprint feature and the second user feature template. For a specific implementation method, refer to S303 and S304. Details are not described herein again.

Certainly, after receiving a model that is updated relative to the second model, the electronic device performs a new round of registration-free upgrade. For example, after the second model-based verification procedure is completed and the identity of the user is verified, if the electronic device has received a third model, the electronic device processes the second verification voice by using the third model to obtain the third user feature template, then updates, by using the third user feature template, the second user feature template stored in the electronic device, and updates, by using the third model, the second model stored in the electronic device. For a specific implementation method, refer to S305. Details are not described herein again.

A user scenario is used as an example above to describe in detail registration, verification, and registration-free upgrade of one user. During specific implementation, embodiments of this application are also applicable to a multi-user scenario. Main differences in the multi-user scenario are as follows: In a first registration procedure, first user feature templates of a plurality of users need to be simultaneously registered. In a verification procedure, a user feature template of a current user needs to be determined from the user feature templates of the plurality of users, to perform identity verification on the current user. In a registration-free upgrade procedure, the user feature templates of the plurality of users need to be simultaneously updated.

It can be learned from the foregoing that, in embodiments of this application, during upgrade of a voiceprint recognition system, a verification voice obtained in a verification process is used as a new registration voice to complete upgrade and registration, so that the upgrade of the voiceprint recognition system can be implemented without user perception, and both voiceprint recognition performance and user experience can be improved.

Based on a same technical concept, an embodiment of this application further provides a chip. The chip is coupled to a memory in an electronic device, and may perform the methods shown in FIG. 3 and FIG. 6A to FIG. 6D.

Based on a same technical concept, an embodiment of this application further provides a computer storage medium. The computer storage medium stores computer instructions. When the computer instructions are executed by one or more processing modules, the method shown in FIG. 3 and FIG. 6A to FIG. 6D is implemented.

Based on a same technical concept, an embodiment of this application further provides a computer program product including instructions. The computer program product stores the instructions. When the instructions are run on a computer, the computer is enabled to perform the methods shown in FIG. 3 and FIG. 6A to FIG. 6D.

It should be understood that, in this application, "/" means "or" unless otherwise specified. For example, A/B may represent A or B. In this application, "and/or" describes only an association relationship between associated objects and represents that three relationships may exist. For example, A and/or B may represent the following three cases: Only A exists, both A and B exist, and only B exists. "At least one" means one or more, and "a plurality of" means two or more.

In this application, "example", "in some embodiments", "in some other embodiments", or the like is used to represent giving an example, an illustration, or a description. Any embodiment or design scheme described as an "example" in this application should not be explained as being more preferred or having more advantages than another embodiment or design scheme. Specifically, the term "example" is used to present a concept in a specific manner.

In addition, terms such as "first" and "second" in this application are merely used for distinction and description, and cannot be understood as an indication or implication of relative importance or implicit indication of a quantity of indicated technical features, or an indication or implication of a sequence.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including, but not limited to, a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes instructions apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application.

## Claims

1. An upgrade method, applied to an electronic device, wherein the method comprises:
acquiring a first verification voice entered by a user;
processing the first verification voice by using a first model stored in the electronic device, to obtain a first voiceprint feature, and verifying an identity of the user based on the first voiceprint feature and a first user feature template stored in the electronic device, wherein the first user feature template is a voiceprint feature obtained by the electronic device by processing a historical verification voice or a registration voice of the user by using the first model; and
after the identity of the user is verified, if the electronic device has received a second model, processing the first verification voice by using the second model, to obtain a second voiceprint feature, updating, based on the second voiceprint feature, the first user feature template stored in the electronic device, and updating, by using the second model, the first model stored in the electronic device.

2. The method according to claim 1, wherein
the verifying an identity of the user based on the first voiceprint feature and a first user feature template stored in the electronic device comprises:
calculating a similarity between the first voiceprint feature and the first user feature template, and determining whether the similarity is greater than a first verification threshold corresponding to the first model, wherein if the similarity is greater than the first verification threshold, verification succeeds, and if the similarity is not greater than the first verification threshold, the verification fails; and
after the processing the first verification voice by using the second model, the method further comprises:
if the electronic device has received a second verification threshold corresponding to the second model, updating the first verification threshold based on the second verification threshold.

3. The method according to claim 1 or 2, wherein the processing the first verification voice by using the second model comprises:
when quality of the first verification voice meets a first preset condition, processing the first verification voice by using the second model, wherein
the first preset condition comprises: the similarity between the first voiceprint feature and the first user feature template is greater than or equal to a first registration-free threshold; and/or a signal-to-noise ratio of the first verification voice is greater than or equal to a first signal-to-noise ratio threshold.

4. The method according to claim 3, wherein the first registration-free threshold is greater than or equal to the first verification threshold corresponding to the first model.

5. The method according to claim 3, wherein after the processing the first verification voice by using the second model, the method further comprises:
if the electronic device has received a second registration-free threshold, updating the first registration-free threshold based on the second registration-free threshold; and/or
if the electronic device has received a second signal-to-noise ratio threshold, updating the first signal-to-noise ratio threshold based on the second signal-to-noise ratio threshold.

6. The method according to any one of claims 1 to 5, wherein the updating, based on the second voiceprint feature, the first user feature template stored in the electronic device, and updating, by using the second model, the first model stored in the electronic device comprises:
after a quantity of second voiceprint features obtained by the electronic device accumulatively reaches a preset quantity, updating, based on the preset quantity of second voiceprint features, the first user feature template stored in the electronic device, and updating, by using the second model, the first model stored in the electronic device.

7. The method according to any one of claims 1 to 6, wherein after the updating, based on the second voiceprint feature, the first user feature template stored in the electronic device, and updating, by using the second model, the first model stored in the electronic device, the method further comprises:
acquiring a second verification voice entered by the user; and
processing the second verification voice by using the second model to obtain a third voiceprint feature, and verifying the identity of the user based on the third voiceprint feature and the second voiceprint feature.

8. The method according to any one of claims 1 to 7, wherein before the acquiring a first verification voice entered by a user, the method further comprises:
prompting the user to enter a verification voice.

9. An electronic device, comprising a microphone and a processor, wherein
the microphone is configured to acquire a first verification voice entered by a user; and
the processor is configured to: process the first verification voice by using a first model stored in the electronic device, to obtain a first voiceprint feature, and verify an identity of the user based on the first voiceprint feature and a first user feature template stored in the electronic device, wherein the first user feature template is a voiceprint feature obtained by the electronic device by processing a historical verification voice or a registration voice of the user by using the first model; and after the identity of the user is verified, if the electronic device has received a second model, process the first verification voice by using the second model, to obtain a second voiceprint feature, update, based on the second voiceprint feature, the first user feature template stored in the electronic device, and update, by using the second model, the first model stored in the electronic device.

10. The electronic device according to claim 9, wherein when verifying the identity of the user based on the first voiceprint feature and the first user feature template stored in the electronic device, the processor is specifically configured to:
calculate a similarity between the first voiceprint feature and the first user feature template, and determine whether the similarity is greater than a first verification threshold corresponding to the first model, wherein if the similarity is greater than the first verification threshold, verification succeeds, and if the similarity is not greater than the first verification threshold, the verification fails; and
the processor is further configured to: after processing the first verification voice by using the second model, if the electronic device has received a second verification threshold corresponding to the second model, update the first verification threshold based on the second verification threshold.

11. The electronic device according to claim 9 or 10, wherein when processing the first verification voice by using the second model, the processor is specifically configured to:
when quality of the first verification voice meets a first preset condition, process the first verification voice by using the second model, wherein
the first preset condition comprises: the similarity between the first voiceprint feature and the first user feature template is greater than or equal to a first registration-free threshold; and/or a signal-to-noise ratio of the first verification voice is greater than or equal to a first signal-to-noise ratio threshold.

12. The electronic device according to claim 11, wherein the first registration-free threshold is greater than or equal to the first verification threshold corresponding to the first model.

13. The electronic device according to claim 11, wherein the processor is further configured to:
after processing the first verification voice by using the second model, if the electronic device has received a second registration-free threshold, update the first registration-free threshold based on the second registration-free threshold; and/or if the electronic device has received a second signal-to-noise ratio threshold, update the first signal-to-noise ratio threshold by using the second signal-to-noise ratio threshold.

14. The electronic device according to any one of claims 9 to 13, wherein when updating, based on the second voiceprint feature, the first user feature template stored in the electronic device, and updating, by using the second model, the first model stored in the electronic device, the processor is specifically configured to:
after a quantity of second voiceprint features obtained by the electronic device accumulatively reaches a preset quantity, update, based on the preset quantity of second voiceprint features, the first user feature template stored in the electronic device, and update, by using the second model, the first model stored in the electronic device.

15. A chip, wherein the chip is coupled to a memory in an electronic device, to perform the method according to any one of claims 1 to 8.

## Patentansprüche

1. Upgrade-Verfahren, angewendet auf eine elektronische Vorrichtung, wobei das Verfahren Folgendes umfasst:
Erfassen einer durch einen Benutzer eingegebenen ersten Verifikationsstimme;
Verarbeiten der ersten Verifikationsstimme unter Verwendung eines in der elektronischen Vorrichtung gespeicherten ersten Modells, um ein erstes Sprachabdrucksmerkmal zu erhalten, und Verifizieren einer Identität des Benutzers basierend auf dem ersten Sprachabdrucksmerkmal und einer in der elektronischen Vorrichtung gespeicherten ersten Benutzermerkmalsvorlage, wobei die erste Benutzermerkmalsvorlage ein Sprachabdrucksmerkmal ist, das durch die elektronische Vorrichtung durch Verarbeiten einer historischen Verifikationsstimme oder einer Registrierungsstimme des Benutzers unter Verwendung des ersten Modells erhalten wird; und
nachdem die Identität des Benutzers verifiziert wurde, wenn die elektronische Vorrichtung ein zweites Modell empfangen hat, Verarbeiten der ersten Verifikationsstimme unter Verwendung des zweiten Modells, um ein zweites Sprachabdrucksmerkmal zu erhalten, Aktualisieren, basierend auf dem zweiten Sprachabdrucksmerkmal, der in der elektronischen Vorrichtung gespeicherten ersten Benutzermerkmalsvorlage und Aktualisieren, unter Verwendung des zweiten Modells, des in der elektronischen Vorrichtung gespeicherten ersten Modells.

2. Verfahren nach Anspruch 1, wobei
das Verifizieren einer Identität des Benutzers basierend auf dem ersten Sprachabdrucksmerkmal und einer in der elektronischen Vorrichtung gespeicherten ersten Benutzermerkmalsvorlage Folgendes umfasst:
Berechnen einer Ähnlichkeit zwischen dem ersten Sprachabdrucksmerkmal und der ersten Benutzermerkmalsvorlage und Bestimmen, ob die Ähnlichkeit größer als eine dem ersten Modell entsprechende erste Verifikationsschwelle ist, wobei, wenn die Ähnlichkeit größer als die erste Verifikationsschwelle ist, die Verifikation erfolgreich ist, und wenn die Ähnlichkeit nicht größer als die erste Verifikationsschwelle ist, die Verifikation fehlschlägt; und
das Verfahren nach dem Verarbeiten der ersten Verifikationsstimme unter Verwendung des zweiten Modells ferner Folgendes umfasst:
wenn die elektronische Vorrichtung eine dem zweiten Modell entsprechende zweite Verifikationsschwelle empfangen hat, Aktualisieren der ersten Verifikationsschwelle basierend auf der zweiten Verifikationsschwelle.

3. Verfahren nach Anspruch 1 oder 2, wobei das Verarbeiten der ersten Verifikationsstimme unter Verwendung des zweiten Modells Folgendes umfasst:
wenn eine Qualität der ersten Verifikationsstimme eine erste voreingestellte Bedingung erfüllt, Verarbeiten der ersten Verifikationsstimme unter Verwendung des zweiten Modells, wobei
die erste voreingestellte Bedingung Folgendes umfasst: die Ähnlichkeit zwischen dem ersten Sprachabdrucksmerkmal und der ersten Benutzermerkmalsvorlage ist größer oder gleich einer ersten registrierungsfreien Schwelle; und/oder ein Signal-Rausch-Verhältnis der ersten Verifikationsstimme ist größer oder gleich einer ersten Signal-Rausch-Verhältnis-Schwelle.

4. Verfahren nach Anspruch 3, wobei die erste registrierungsfreie Schwelle größer oder gleich der dem ersten Modell entsprechenden ersten Verifikationsschwelle ist.

5. Verfahren nach Anspruch 3, wobei das Verfahren nach dem Verarbeiten der ersten Verifikationsstimme unter Verwendung des zweiten Modells ferner Folgendes umfasst:
wenn die elektronische Vorrichtung eine zweite registrierungsfreie Schwelle empfangen hat, Aktualisieren der ersten registrierungsfreien Schwelle basierend auf der zweiten registrierungsfreien Schwelle; und/oder
wenn die elektronische Vorrichtung eine zweite Signal-Rausch-Verhältnis-Schwelle empfangen hat, Aktualisieren der ersten Signal-Rausch-Verhältnis-Schwelle basierend auf der zweiten Signal-Rausch-Verhältnis-Schwelle.

6. Verfahren nach einem der Ansprüche 1 bis 5, wobei das Aktualisieren, basierend auf dem zweiten Sprachabdrucksmerkmal, der in der elektronischen Vorrichtung gespeicherten ersten Benutzermerkmalsvorlage und Aktualisieren, unter Verwendung des zweiten Modells, des in der elektronischen Vorrichtung gespeicherten ersten Modells Folgendes umfasst:
nachdem eine Anzahl von durch die elektronische Vorrichtung erhaltenen zweiten Sprachabdrucksmerkmalen kumulativ eine voreingestellte Anzahl erreicht, Aktualisieren, basierend auf der voreingestellten Anzahl von zweiten Sprachabdrucksmerkmalen, der in der elektronischen Vorrichtung gespeicherten ersten Benutzermerkmalsvorlage und Aktualisieren, unter Verwendung des zweiten Modells, des in der elektronischen Vorrichtung gespeicherten ersten Modells.

7. Verfahren nach einem der Ansprüche 1 bis 6, wobei das Verfahren nach dem Aktualisieren, basierend auf dem zweiten Sprachabdrucksmerkmal, der in der elektronischen Vorrichtung gespeicherten ersten Benutzermerkmalsvorlage und Aktualisieren, unter Verwendung des zweiten Modells, des in der elektronischen Vorrichtung gespeicherten ersten Modells ferner Folgendes umfasst:
Erfassen einer durch den Benutzer eingegebenen zweiten Verifikationsstimme; und
Verarbeiten der zweiten Verifikationsstimme unter Verwendung des zweiten Modells, um ein drittes Sprachabdrucksmerkmal zu erhalten, und Verifizieren der Identität des Benutzers basierend auf dem dritten Sprachabdrucksmerkmal und dem zweiten Sprachabdrucksmerkmal.

8. Verfahren nach einem der Ansprüche 1 bis 7, wobei das Verfahren vor dem Erfassen einer durch einen Benutzer eingegebenen ersten Verifikationsstimme ferner Folgendes umfasst:
Auffordern des Benutzers zum Eingeben einer Verifikationsstimme.

9. Elektronische Vorrichtung, umfassend ein Mikrofon und einen Prozessor, wobei das Mikrofon zum Erfassen einer durch einen Benutzer eingegebenen ersten Verifikationsstimme ausgelegt ist, und
der Prozessor zu Folgendem ausgelegt ist: Verarbeiten der ersten Verifikationsstimme unter Verwendung eines in der elektronischen Vorrichtung gespeicherten ersten Modells, um ein erstes Sprachabdrucksmerkmal zu erhalten, und Verifizieren einer Identität des Benutzers basierend auf dem ersten Sprachabdrucksmerkmal und einer in der elektronischen Vorrichtung gespeicherten ersten Benutzermerkmalsvorlage, wobei die erste Benutzermerkmalsvorlage ein Sprachabdrucksmerkmal ist, das durch die elektronische Vorrichtung durch Verarbeiten einer historischen Verifikationsstimme oder einer Registrierungsstimme des Benutzers unter Verwendung des ersten Modells erhalten wird; und nachdem die Identität des Benutzers verifiziert wurde, wenn die elektronische Vorrichtung ein zweites Modell empfangen hat, Verarbeiten der ersten Verifikationsstimme unter Verwendung des zweiten Modells, um ein zweites Sprachabdrucksmerkmal zu erhalten, Aktualisieren, basierend auf dem zweiten Sprachabdrucksmerkmal, der in der elektronischen Vorrichtung gespeicherten ersten Benutzermerkmalsvorlage und Aktualisieren, unter Verwendung des zweiten Modells, des in der elektronischen Vorrichtung gespeicherten ersten Modells.

10. Elektronische Vorrichtung nach Anspruch 9, wobei der Prozessor beim Verifizieren der Identität des Benutzers basierend auf dem ersten Sprachabdrucksmerkmal und der in der elektronischen Vorrichtung gespeicherten ersten Benutzermerkmalsvorlage insbesondere zu Folgendem ausgelegt ist:
Berechnen einer Ähnlichkeit zwischen dem ersten Sprachabdrucksmerkmal und der ersten Benutzermerkmalsvorlage und Bestimmen, ob die Ähnlichkeit größer als eine dem ersten Modell entsprechende erste Verifikationsschwelle ist, wobei, wenn die Ähnlichkeit größer als die erste Verifikationsschwelle ist, die Verifikation erfolgreich ist, und wenn die Ähnlichkeit nicht größer als die erste Verifikationsschwelle ist, die Verifikation fehlschlägt; und
der Prozessor ferner zu Folgendem ausgelegt ist: nach dem Verarbeiten der ersten Verifikationsstimme unter Verwendung des zweiten Modells, wenn die elektronische Vorrichtung eine dem zweiten Modell entsprechende zweite Verifikationsschwelle empfangen hat, Aktualisieren der ersten Verifikationsschwelle basierend auf der zweiten Verifikationsschwelle.

11. Elektronische Vorrichtung nach Anspruch 9 oder 10, wobei der Prozessor beim Verarbeiten der ersten Verifikationsstimme unter Verwendung des zweiten Modells insbesondere zu Folgendem ausgelegt ist:
wenn eine Qualität der ersten Verifikationsstimme eine erste voreingestellte Bedingung erfüllt, Verarbeiten der ersten Verifikationsstimme unter Verwendung des zweiten Modells, wobei
die erste voreingestellte Bedingung Folgendes umfasst: die Ähnlichkeit zwischen dem ersten Sprachabdrucksmerkmal und der ersten Benutzermerkmalsvorlage ist größer oder gleich einer ersten registrierungsfreien Schwelle; und/oder ein Signal-Rausch-Verhältnis der ersten Verifikationsstimme ist größer oder gleich einer ersten Signal-Rausch-Verhältnis-Schwelle.

12. Elektronische Vorrichtung nach Anspruch 11, wobei die erste registrierungsfreie Schwelle größer oder gleich der dem ersten Modell entsprechenden ersten Verifikationsschwelle ist.

13. Elektronische Vorrichtung nach Anspruch 11, wobei der Prozessor ferner zu Folgendem ausgelegt ist:
nach dem Verarbeiten der ersten Verifikationsstimme unter Verwendung des zweiten Modells, wenn die elektronische Vorrichtung eine zweite registrierungsfreie Schwelle empfangen hat, Aktualisieren der ersten registrierungsfreien Schwelle basierend auf der zweiten registrierungsfreien Schwelle; und/oder wenn die elektronische Vorrichtung eine zweite Signal-Rausch-Verhältnis-Schwelle empfangen hat, Aktualisieren der ersten Signal-Rausch-Verhältnis-Schwelle unter Verwendung der zweiten Signal-Rausch-Verhältnis-Schwelle.

14. Elektronische Vorrichtung nach einem der Ansprüche 9 bis 13, wobei der Prozessor beim Aktualisieren, basierend auf dem zweiten Sprachabdrucksmerkmal, der in der elektronischen Vorrichtung gespeicherten ersten Benutzermerkmalsvorlage und Aktualisieren, unter Verwendung des zweiten Modells, des in der elektronischen Vorrichtung gespeicherten ersten Modells insbesondere zu Folgendem ausgelegt ist:
Nachdem eine Anzahl von durch die elektronische Vorrichtung erhaltenen zweiten Sprachabdrucksmerkmalen kumulativ eine voreingestellte Anzahl erreicht, Aktualisieren, basierend auf der voreingestellten Anzahl von zweiten Sprachabdrucksmerkmalen, der in der elektronischen Vorrichtung gespeicherten ersten Benutzermerkmalsvorlage und Aktualisieren, unter Verwendung des zweiten Modells, des in der elektronischen Vorrichtung gespeicherten ersten Modells.

15. Chip, wobei der Chip mit einem Speicher in einer elektronischen Vorrichtung gekoppelt ist, um das Verfahren nach einem der Ansprüche 1 bis 8 durchzuführen.

## Revendications

1. Procédé de mise à niveau, appliqué à un dispositif électronique, dans lequel le procédé comprend :
l'acquisition d'une première voix de vérification entrée par un utilisateur ;
le traitement de la première voix de vérification au moyen d'un premier modèle stocké dans le dispositif électronique, pour obtenir une première caractéristique d'empreinte vocale, et la vérification d'une identité de l'utilisateur sur la base de la première caractéristique d'empreinte vocale et d'un premier modèle de caractéristique d'utilisateur stocké dans le dispositif électronique, dans lequel le premier modèle de caractéristique d'utilisateur est une caractéristique d'empreinte vocale obtenue par le dispositif électronique par le traitement d'une voix de vérification historique ou d'une voix d'enregistrement de l'utilisateur au moyen du premier modèle ; et
après que l'identité de l'utilisateur est vérifiée, si le dispositif électronique a reçu un second modèle, le traitement de la première voix de vérification au moyen du second modèle, pour obtenir une deuxième caractéristique d'empreinte vocale, la mise à jour, sur la base de la deuxième caractéristique d'empreinte vocale, du premier modèle de caractéristique d'utilisateur stocké dans le dispositif électronique, et la mise à jour, au moyen du second modèle, du premier modèle stocké dans le dispositif électronique.

2. Procédé selon la revendication 1, dans lequel
la vérification d'une identité de l'utilisateur sur la base de la première caractéristique d'empreinte vocale et d'un premier modèle de caractéristique d'utilisateur stocké dans le dispositif électronique comprend :
le calcul d'une similarité entre la première caractéristique d'empreinte vocale et le premier modèle de caractéristique d'utilisateur, et la détermination de si la similarité est supérieure ou non à un premier seuil de vérification correspondant au premier modèle, dans lequel si la similarité est supérieure au premier seuil de vérification, la vérification a lieu, et si la similarité n'est pas supérieure au premier seuil de vérification, la vérification échoue ; et
après le traitement de la première voix de vérification au moyen du second modèle, le procédé comprend en outre :
si le dispositif électronique a reçu un second seuil de vérification correspondant au second modèle, la mise à jour du premier seuil de vérification sur la base du second seuil de vérification.

3. Procédé selon la revendication 1 ou 2, dans lequel le traitement de la première voix de vérification au moyen du second modèle comprend :
lorsque la qualité de la première voix de vérification satisfait une première condition prédéfinie, le traitement de la première voix de vérification au moyen du second modèle, dans lequel
la première condition prédéfinie comprend : la similarité entre la première caractéristique d'empreinte vocale et le premier modèle de caractéristique d'utilisateur est supérieure ou égale à un premier seuil sans enregistrement ; et/ou un rapport signal sur bruit de la première voix de vérification est supérieur ou égal à un premier seuil de rapport signal sur bruit.

4. Procédé selon la revendication 3, dans lequel le premier seuil sans enregistrement est supérieur ou égal au premier seuil de vérification correspondant au premier modèle.

5. Procédé selon la revendication 3, dans lequel après le traitement de la première voix de vérification au moyen du second modèle, le procédé comprend en outre :
si le dispositif électronique a reçu un second seuil sans enregistrement, la mise à jour du premier seuil sans enregistrement sur la base du second seuil sans enregistrement ; et/ou
si le dispositif électronique a reçu un second seuil de rapport signal sur bruit, la mise à jour du premier seuil de rapport signal sur bruit sur la base du second seuil de rapport signal sur bruit.

6. Procédé selon l'une quelconque des revendications 1 à 5, dans lequel la mise à jour, sur la base de la deuxième caractéristique d'empreinte vocale, du premier modèle de caractéristique d'utilisateur stocké dans le dispositif électronique, et la mise à jour, au moyen du second modèle, du premier modèle stocké dans le dispositif électronique comprend :
après qu'une quantité de deuxièmes caractéristiques d'empreinte vocale obtenues par le dispositif électronique de façon cumulative atteint une quantité prédéfinie, la mise à jour, sur la base de la quantité prédéfinie de deuxièmes caractéristiques d'empreinte vocale, du premier modèle de caractéristique d'utilisateur stocké dans le dispositif électronique, et la mise à jour, au moyen du second modèle, du premier modèle stocké dans le dispositif électronique.

7. Procédé selon l'une quelconque des revendications 1 à 6, dans lequel après la mise à jour, sur la base de la deuxième caractéristique d'empreinte vocale, du premier modèle de caractéristique d'utilisateur stocké dans le dispositif électronique, et la mise à jour, au moyen du second modèle, du premier modèle stocké dans le dispositif électronique, le procédé comprend en outre :
l'acquisition d'une seconde voix de vérification entrée par l'utilisateur ; et
le traitement de la seconde voix de vérification au moyen du second modèle pour obtenir une troisième caractéristique d'empreinte vocale, et la vérification de l'identité de l'utilisateur sur la base de la troisième caractéristique d'empreinte vocale et de la deuxième caractéristique d'empreinte vocale.

8. Procédé selon l'une quelconque des revendications 1 à 7, dans lequel avant l'acquisition d'une première voix de vérification entrée par un utilisateur, le procédé comprend en outre :
l'invite à l'utilisateur d'entrer une voix de vérification.

9. Dispositif électronique, comprenant un microphone et un processeur, dans lequel le microphone est configuré pour acquérir une première voix de vérification entrée par un utilisateur ; et
le processeur est configuré pour : traiter la première voix de vérification au moyen d'un premier modèle stocké dans le dispositif électronique, pour obtenir une première caractéristique d'empreinte vocale, et vérifier une identité de l'utilisateur sur la base de la première caractéristique d'empreinte vocale et d'un premier modèle de caractéristique d'utilisateur stocké dans le dispositif électronique, dans lequel le premier modèle de caractéristique d'utilisateur est une caractéristique d'empreinte vocale obtenue par le dispositif électronique par le traitement d'une voix de vérification historique ou d'une voix d'enregistrement de l'utilisateur au moyen du premier modèle ; et après que l'identité de l'utilisateur est vérifiée, si le dispositif électronique a reçu un second modèle, traiter la première voix de vérification au moyen du second modèle, pour obtenir une deuxième caractéristique d'empreinte vocale, mettre à jour, sur la base de la deuxième caractéristique d'empreinte vocale, le premier modèle de caractéristique d'utilisateur stocké dans le dispositif électronique, et mettre à jour, au moyen du second modèle, le premier modèle stocké dans le dispositif électronique.

10. Dispositif électronique selon la revendication 9, dans lequel lors de la vérification de l'identité de l'utilisateur sur la base de la première caractéristique d'empreinte vocale et du premier modèle de caractéristique d'utilisateur stocké dans le dispositif électronique, le processeur est spécifiquement configuré pour :
calculer une similarité entre la première caractéristique d'empreinte vocale et le premier modèle de caractéristique d'utilisateur, et déterminer si la similarité est supérieure ou non à un premier seuil de vérification correspondant au premier modèle, dans lequel si la similarité est supérieure au premier seuil de vérification, la vérification a lieu, et si la similarité n'est pas supérieure au premier seuil de vérification, la vérification échoue ; et
le processeur est en outre configuré pour : après le traitement de la première voix de vérification au moyen du second modèle, si le dispositif électronique a reçu un second seuil de vérification correspondant au second modèle, mettre à jour le premier seuil de vérification sur la base du second seuil de vérification.

11. Dispositif électronique selon la revendication 9 ou 10, dans lequel lors du traitement de la première voix de vérification au moyen du second modèle, le processeur est spécifiquement configuré pour :
lorsque la qualité de la première voix de vérification satisfait une première condition prédéfinie, traiter la première voix de vérification au moyen du second modèle, dans lequel
la première condition prédéfinie comprend : la similarité entre la première caractéristique d'empreinte vocale et le premier modèle de caractéristique d'utilisateur est supérieure ou égale à un premier seuil sans enregistrement ; et/ou un rapport signal sur bruit de la première voix de vérification est supérieur ou égal à un premier seuil de rapport signal sur bruit.

12. Dispositif électronique selon la revendication 11, dans lequel le premier seuil sans enregistrement est supérieur ou égal au premier seuil de vérification correspondant au premier modèle.

13. Dispositif électronique selon la revendication 11, dans lequel le processeur est en outre configuré pour :
après le traitement de la première voix de vérification au moyen du second modèle, si le dispositif électronique a reçu un second seuil sans enregistrement, mettre à jour le premier seuil sans enregistrement sur la base du second seuil sans enregistrement ;
et/ou si le dispositif électronique a reçu un second seuil de rapport signal sur bruit, mettre à jour le premier seuil de rapport signal sur bruit sur la base du second seuil de rapport signal sur bruit.

14. Dispositif électronique selon l'une quelconque des revendications 9 à 13, dans lequel lors de la mise à jour, sur la base de la deuxième caractéristique d'empreinte vocale, du premier modèle de caractéristique d'utilisateur stocké dans le dispositif électronique, et de la mise à jour, au moyen du second modèle, du premier modèle stocké dans le dispositif électronique, le processeur est spécifiquement configuré pour : après qu'une quantité de deuxièmes caractéristiques d'empreinte vocale obtenues par le dispositif électronique de façon cumulative atteint une quantité prédéfinie, mettre à jour, sur la base de la quantité prédéfinie de deuxièmes caractéristiques d'empreinte vocale, le premier modèle de caractéristique d'utilisateur stocké dans le dispositif électronique, et mettre à jour, au moyen du second modèle, le premier modèle stocké dans le dispositif électronique.

15. Puce, dans laquelle la puce est couplée à une mémoire dans un dispositif électronique, pour exécuter le procédé selon l'une quelconque des revendications 1 à 8.
